# EUROPEAN PATENT SPECIFICATION

(11) **EP 2 731 379 B1**
(45) Date of publication and mention of the grant of the patent: **19.09.2018**
(21) Application number: 12814946.5
(22) Date of filing: 18.07.2012
(51) Int. Cl.: H04W 36/18, H04L 29/08, H04W 36/38

(54) **PERSONAL AREA NETWORK-BASED METHOD AND DEVICE FOR SEAMLESS HANDOVER**
PAN-BASIERTES VERFAHREN UND VORRICHTUNG FÜR NAHTLOSE ÜBERGABE
PROCÉDÉ ET DISPOSITIF PERMETTANT D'EFFECTUER UN TRANSFERT TRANSPARENT DANS UN RÉSEAU PERSONNEL

(30) Priority: 20.07.2011 CN 201110203996
(43) Date of publication of application: 14.05.2014
(73) Proprietor: ZTE Corporation, Shenzhen, Guangdong 518057 (CN)
(72) Inventor: YAO, Lizhe, Shenzhen Guangdong 518057 (CN); CHEN, Jun, Shenzhen Guangdong 518057 (CN); SHANG, Guoqiang, Shenzhen Guangdong 518057 (CN)
(74) Representative: J A Kemp
(86) International application number: PCT/CN2012/078823
(87) International publication number: WO 2013/010485

(56) References cited:
- WO-A2-2010/131860
- CN-A- 101 594 648
- CN-A- 102 075 892
- CN-A- 102 111 827

## Description

### TECHNICAL FIELD

The disclosure relates to personal-network based handover techniques, and in particular to a method and device for personal-network based seamless handover.

### BACKGROUND

With the development of science and techniques, people possess more and more personal devices, such as a mobile phone, a laptop, a PDA, an MP3, an MP4 and so on, with increasing capabilities; and most of the devices are capable of short-range communication; therefore there is an increasing desire for these devices around people to be connected together into a Personal area Network (PN) to share a resource and a capability of each other.

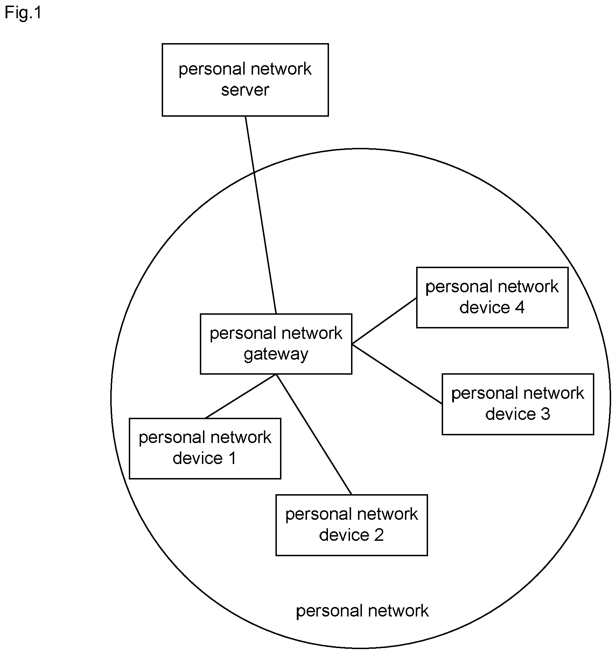

Fig. 1 shows a schematic diagram of networking among various devices in a PN including personal network devices, a personal network gateway, and a personal network server, a networking relationship thereamong being that: the personal network consists of the personal network gateway, a personal network device 1, a personal network device 2, a personal network device 3, and a personal network device 4. The personal network is connected to the personal network server via the personal network gateway of the personal network.

However, for various reasons (for example, when the personal network device has low battery or the personal network device leaves the present personal network), the personal network device cannot be able to continue using a current service, and needs to hand the service over to another personal network device. At present, there lacks an effective solution for implementing seamless handover of a service within a personal network aiming at such a need.

WO 2010/131860 A2 discloses a method and apparatus for optimizing the use of CPNS entities. The method includes receiving, by a CPNS server, a low battery level indication for an operation from a certain one of CPNS entities; requesting, by the CPNS server, battery level information from at least some of the CPNS entities in response to the low battery level indication; determining, by the CPNS server, life expectancy information for each of the at least some of the CPNS entities based on the battery level information; and transmitting, by the CPNS server, a message to at least one CPNS gateway to use one of the at least some of the CPNS entities instead of the certain one of the CPNS entities to perform the operation, based on the life expectancy information.

CN 102 111 827 A discloses a switching control system and method in terminal collaboration of a PAN (Personal Area Network). The method mainly comprises the following steps: if a slave device in the PAN meets a switching condition of the slave device during collaborating with a master device, a request for replacing the slave device is sent to an MRF (Media Resource Function) entity by the slave device; a new slave device is selected from devices in the PAN by the MRF according to the information of each device in the PAN, and the information of the new slave device is fed back to the request slave device; the information of the new slave device is received and sent to the master device by the request slave device; a collaborative request is sent to the new slave device by the master device;a confirmed message is fed back to the master device by the new slave device, and a service proxy request is sent to a proxy server by the new slave device; the service flow is switched to the new slave device by the proxy server, and the confirmed message is fed back to the new slave device by the proxy server; and a switch completion notice message is sent to the master device by the new slave device, and the connection between the master device and the request slave device is cut off.

CN 101 594 648 A discloses a switching method of a wireless personal area network, which is used for solving the problem of high-speed seamless safety switching of a wireless personal area network in an IP multimedia subsystem. A second tunnel is established under the condition without cutting off the original IPSec tunnel, and the node routing information corresponding to each P-CSCF is updated to establish a new connection between a moving personal area network and a corresponding node in conversation and to keep the continuity of conversation before and after the original connection is cut off. The system expense of a conversation packet in the method is less.

CN 102 075 892 A discloses a method for personal network voice switch, which includes: during the process that a user makes a voice call with remote users by a source portable device and a mobile terminal, initiating a switch request from a switch request device to said mobile terminal, and said switch request contains object portable device information; said mobile terminal switches the voice call between said mobile terminal and source portable device to the object portable device based on said switch request. Also disclosed are a system for personal network voice switch. In a call with a portable device, voice can be switched to other portable devices in personal network using short distance communication technology to continue the call as needed.

### SUMMARY

In view of this, it is desired that the disclosure provides a method and device for personal-network based seamless handover, capable of providing an effective solution for implementing seamless handover of a service within a personal network when service handover needs to be performed.

The features of the method and device according to the present disclosure are defined in the independent claims, and the preferable features according to the present invention are defined in the dependent claims.

With an embodiment of the disclosure, when a service handover request is received or when handover needs to be performed for a service, a personal network gateway selects a target personal network device; when the target personal network device agrees to perform a service handover, the service handover from an original personal network device to the target personal network device is performed.

With an embodiment of the disclosure, it is possible to provide an effective solution for implementing seamless handover of a service within a personal network when service handover needs to be performed, such that a service on an original personal network device is handed over to a target personal network device.

### BRIEF DESCRIPTION OF THE DRAWINGS

Fig.1 is a schematic diagram of networking among various devices in a PN in related art;
Fig.2 is a flowchart showing the basic principle of a method for seamless handover according to an embodiment of the disclosure;
Fig.3 is a schematic diagram showing the networking of specific embodiments 1 and 3 of the disclosure; and
Fig.4 is a schematic diagram showing the networking of specific embodiment 2 of the disclosure.

### DETAILED DESCRIPTION

Implementation of a technical solution of the disclosure is further elaborated below with reference to the drawings.

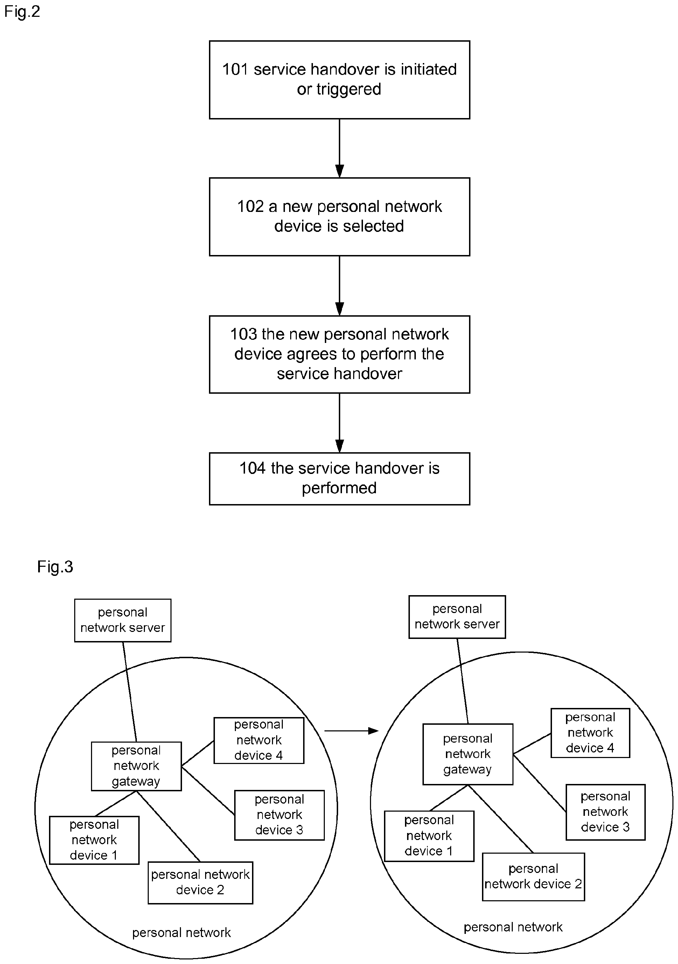

A method for personal-network based seamless handover, namely, service handover within a personal network, a flow showing the basic principle thereof being shown in Fig.2, the method mainly including steps as follows.

Step 101: service handover may be initiated or triggered by a user, a personal network server, a service, a personal network device, a personal network gateway, or a particular event.

Here, the particular event includes power shortage of the personal network device, the user leaving or entering a particular area such as a home, a car, a hotel, or the like, which is not elaborated.

Here, in step 101, when the initiator of the service handover is not the personal network gateway, for example, the initiator of the service handover is the personal network device, then the initiator sends the personal network gateway a service handover request containing service description information such as service identifier information and the like; when the initiator of the service handover is the personal network gateway itself, this step is skipped.

Preferably, if the service description information contained in step 101 includes synchronization information for the service synchronization, then in subsequent step 103, the synchronization information is also sent by the personal network gateway to a new personal network device, and in step 104, the new personal network device performs service synchronization according to the synchronization information; if the service description information contained in step 101 includes no synchronization information for the service synchronization, then in subsequent step 104, before the new personal network device performs the service handover, the new personal network device may further acquire the synchronization information by interacting with the original personal network device or via a service server.

Step 102: the new personal network device is selected and the service handover is performed.

Here, in step 102, when the new personal network device is selected and the service handover is performed, the new personal network device may be selected to be another personal network device other than the original personal network device in a same personal network. The new personal network device may include: the user, the personal network server, the service, the personal network gateway, or another personal network device other than the original personal network device.

Here, there may be multiple standards for selecting the new personal network device, such as random selection, selection according to a device capacity, selection according to a service type and the like. Here, as to the device capacity, both a personal network device or the personal network gateway are logic entities that may exist in a specific physical device (such as a mobile phone), so the device capacity herein refers to the capacity of the physical device in which such logic entities are located, which is not elaborated.

Here, the method includes that: before the new personal network device is selected and the service handover is performed,
A1: the personal network gateway sends the service handover request to an entity in charge of selecting the new personal network device, and if the personal network gateway is in charge of selecting the new personal network device, this step is skipped.

Selecting the new personal network device and performing the service handover includes that:
B1: the entity in charge of selecting the new personal network device selects the new personal network device.

The method includes that: after the new personal network device is selected and the service handover is performed,
C1: the entity in charge of selecting the new personal network device returns a result of the selection to the personal network gateway, and if the personal network gateway is in charge of selecting the new personal network device, this step is skipped.

Step 103: the new personal network device agrees to perform the service handover.

Here, the method includes that: before the new personal network device agrees to perform the service handover, the personal network gateway sends the selected new personal network device the service handover request containing the service description information such as the service identifier.

If the new personal network device agrees to perform handover and is capable of supporting the service, then subsequent step 104 is performed; if the new personal network device does not agree to perform handover, then a handover-cannot-be-performed response is returned to the initiator, and the flow goes back to the step 102 to reselect a new personal network device.

Step 104: the service handover from the original personal network device to the new personal network device is performed.

Here, the performing the service handover includes that: the new personal network device acquires the service according to the received service description information, and perform synchronization with the service on the original personal network device, such as time synchronization, status synchronization, and the like.

The method includes that: after performing the service handover, the handover-completes response is returned to the personal network gateway; the personal network gateway returns the handover-completes response to the initiator; the original personal network device stops using the service.

Preferably, in step 104, if the initiator is not the original personal network device, then the initiator needs to instruct, via the personal network gateway, the original personal network device to stop using the service; if the personal network gateway is the initiator, then the personal network gateway directly instructs the original personal network device to stop using the service.

Preferably, the method further includes that: after the handover-completes response is returned to the personal network gateway, the personal network gateway sends a service server an updating message, and the service server changes a service provider in the service description information according to the updating message.

In addition, if there are more than one services being used or provided by the personal network requiring the handover, then the handover as described needs to be performed for each service thereof.

Here, the new personal network device herein may also be a target personal network device corresponding to the original personal network device.

A device for personal-network based seamless handover is located at a personal network gateway, and the device includes a target selecting unit and a service handover unit. The target selecting unit is configured to select a target personal network device when the personal network gateway receives a service handover triggering request or needs to hand over a service; the service handover unit is configured to perform a service handover from an original personal network device to the target personal network device when the target personal network device agrees to perform the service handover.

Here, the device further includes a service handover triggering unit configured to have the service handover request be initiated or triggered by a user, a personal network server, the service, a personal network device, the personal network gateway, or a particular event.

Here, the target selecting unit is further configured to select another personal network device other than the original personal network device in a same personal network as a target-personal-network-device selecting entity. The target-personal-network-device selecting entity may include: the user, the personal network server, the service, the personal network gateway, or another personal network device other than the original personal network device.

Here, the target selecting unit may be further configured such that, when an initiator initiating or triggering the service handover is not the personal network gateway, the initiator may send the personal network gateway the service handover request containing service description information; and the personal network gateway may select the target personal network device according to the service description information, or send the service handover request to a target-personal-network-device selecting entity, and the target-personal-network-device selecting entity may select the target personal network device.

Here, the target selecting unit is configured such that, when an initiator initiating or triggering the service handover is the personal network gateway, the personal network gateway may select the target personal network device directly according to local service description information.

Here, the device may further include a service stopping unit configured to, after the service handover from an original personal network device to the target personal network device is performed, return a handover-completes response to the initiator initiating or triggering the service handover, and stop the service previously used by the original personal network device.

Here, the device may further include a service updating unit configured to send a service server an updating message, such that the service server changes a service provider in the service description information according to the updating message.

The disclosure is illustrated below with examples.

### Embodiment 1

A user A has a personal network including a personal network gateway and four personal network devices, a schematic diagram showing the networking being shown in Fig.3, wherein a personal network device 1 and a personal network device 4 support a video service. The user A is using a video-on-demand service through the personal network gateway using the personal network device 1 when the personal network device 1 runs out of battery power. In such a case, a seamless handover flow includes the following steps.

Step 201: a user A sends a personal network gateway a service handover request containing description information of a video-on-demand service using a personal network device 1.

Step 202: after receiving the service handover request, the personal network gateway determines that a personal network device 4 is selected as a new personal network device after handover according to the description information of the video-on-demand service.

Step 203: the personal network gateway sends the personal network device 4 a service handover request containing the description information of the video-on-demand service.

Step 204: the personal network device 4 agrees on the handover after receiving the service handover request from the personal network gateway.

Step 205: the personal network device 4 establishes, according to the received description information of the video-on-demand service, a connection with a service server through the personal network gateway.

Step 206: the personal network device 4 sends, through the personal network gateway, the personal network device 1 a synchronization-information acquiring request to acquire synchronization information for service synchronization.

Step 207: after receiving the synchronization-information acquiring request, the personal network gateway forwards the synchronization-information acquiring request to the personal network device 1.

Step 208: after receiving the synchronization-information acquiring request, the personal network device 1 returns to the personal network gateway a synchronization-information-request response containing present information of the video-on-demand service, such as a present playing time and the like.

Step 209: the personal network gateway forwards the synchronization-information-request response to the personal network device 4.

Step 210: after receiving the synchronization-information-request response, the personal network device 4 plays the video-on-demand service starting from the present playing time according to the acquired synchronization information.

Step 211: the personal network device 4 returns a handover-completes response to the personal network gateway.

Step 212: the personal network gateway returns to the personal network device 1 a handover-completes response.

Step 213: after receiving the handover-completes response, the personal network device 1 ends the video-on-demand service.

### Embodiment 2

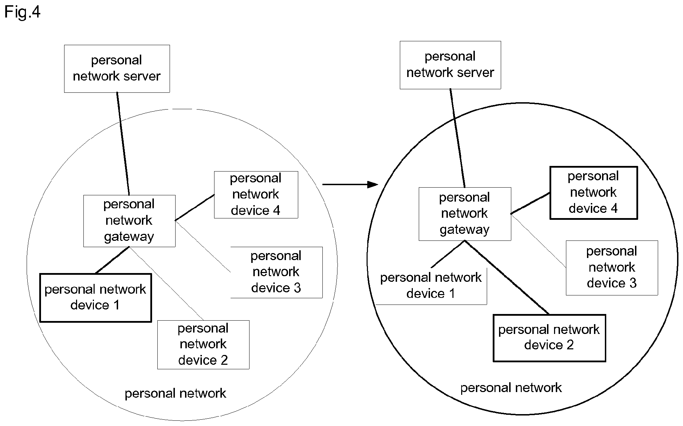

A user A has a personal network including a personal network gateway and four personal network devices, a schematic diagram showing the networking being shown in Fig.4, wherein a personal network device 1, a personal network device 2, and a personal network device 4 support a video service. The user A is using a video-on-demand service through the personal network gateway using the personal network device 1 when the personal network device 1 needs to leave the personal network. In such a case, a seamless handover flow includes the following steps.

Step 301: a user A sends a personal network gateway a service handover request containing description information of a video-on-demand service using a personal network device 1, wherein the description information of the video-on-demand service includes synchronization information for service synchronization, such as a present playing time and the like.

Step 302: after receiving the service handover request, the personal network gateway determines that a personal network device 4 is selected as a new personal network device after handover according to the description information of the video-on-demand service.

Step 303: the personal network gateway sends the personal network device 4 a service handover request containing the description information of the video-on-demand service.

Step 304: after receiving the service handover request from the personal network gateway, the personal network device 4 refuses the handover, and returns to the personal network gateway a handover refusing response.

Step 305: after receiving the handover refusing response, the personal network gateway reselects a personal network device 2 as the new personal network device after handover.

Step 306: the personal network gateway sends the personal network device 2 a service handover request containing the description information of the video-on-demand service, wherein the description information of the video-on-demand service includes synchronization information for service synchronization, such as a present playing time and the like.

Step 307: the personal network device 2 agrees on the handover after receiving the service handover request from the personal network gateway.

Step 308: the personal network device 2 establishes, according to the received description information of the video-on-demand service, a connection with a service server through the personal network gateway.

Step 309: the personal network device 2 plays, according to the received synchronization information, the video-on-demand service starting from the present playing time.

Step 310: the personal network device 2 returns a handover-completes response to the personal network gateway.

Step 311: the personal network gateway returns to the personal network device 1 a handover-completes response.

Step 312: after receiving the handover-completes response, the personal network device 1 ends the video-on-demand service.

### Embodiment 3

A user A has a personal network including a personal network gateway and four personal network devices, a schematic diagram showing the networking being shown in Fig.3, wherein a personal network device 1 and a personal network device 4 support a video service. The user A is using a video-on-demand service through the personal network gateway using the personal network device 1 when the personal network device 1 runs out of battery power. In such a case, a seamless handover flow includes the following steps.

Step 401: a user A sends a personal network gateway a service handover request containing description information of a video-on-demand service using a personal network device 1.

Step 402: after receiving the service handover request, the personal network gateway determines that a personal network device 4 is selected as a new personal network device after handover according to the description information of the video-on-demand service.

Step 403: the personal network gateway sends the personal network device 4 a service handover request containing the description information of the video-on-demand service.

Step 404: the personal network device 4 agrees on the handover after receiving the service handover request from the personal network gateway.

Step 405: the personal network device 4 establishes, according to the received description information of the video-on-demand service, a connection with a service server through the personal network gateway.

Step 406: the personal network device 4 acquires synchronization information for service synchronization from a service server.

Step 407: the personal network device 4 plays the video-on-demand service starting from a present playing time according to the acquired synchronization information.

Step 408: the personal network device 4 returns a handover-completes response to the personal network gateway.

Step 409: the personal network gateway returns to the personal network device 1 a handover-completes response.

Step 410: after receiving the handover-completes response, the personal network device 1 ends the video-on-demand service.

Note here that the embodiment differs from Embodiment 1 in that the synchronization information is acquired from the service server instead of from the original personal network device through the personal network gateway.

### Embodiment 4:

A user A has a personal network including a personal network gateway and four personal network devices, a schematic diagram showing the networking being shown in Fig.3, wherein a personal network device 1 and a personal network device 4 support a picture sharing service. The user A is using the picture sharing service through the personal network gateway using the personal network device 1 when the personal network device 1 runs out of battery power. In such a case, a seamless handover flow includes the following steps.

Step 501: a user A sends a personal network gateway a service handover request containing description information of a picture sharing service using a personal network device 1.

Step 502: after receiving the service handover request, the personal network gateway determines, according to the description information of the picture sharing service, that a personal network device 4 is selected as a new personal network device after handover.

Step 503: the personal network gateway sends the personal network device 4 a service handover request containing the description information of the picture sharing service.

Step 504: the personal network device 4 agrees on the handover after receiving the service handover request from the personal network gateway.

Step 505: the personal network device 4 acquires, according to the received description information of the picture sharing service, synchronization information for service synchronization including a picture, related information, and the like from the personal network device 1.

Specifically, the personal network device 4 may acquire the synchronization information through a connection established with a service server, or from the personal network device 1 through the personal network gateway.

Step 506: the personal network device 4 acquires according to the acquired synchronization information, the picture sharing service from the personal network device 1.

Step 507: the personal network device 4 returns a handover-completes response to the personal network gateway.

Step 508: the personal network gateway sends a service-network server an updating message such that the service server updates the description information of the picture sharing service, in which a service provider changes from the personal network device 1 to the personal network device 4.

Step 509: the personal network server updates, according to the received updating message, the description information of the picture sharing service, changing the service provider from the personal network device 1 to the personal network device 4, and returns to the personal network gateway an updating response.

Step 510: the personal network gateway returns to the personal network device 1 a handover-completes response.

Step 511: after receiving the handover-completes response, the personal network device 1 ends the picture sharing service.

What described are merely preferred embodiments of the disclosure and are not intended to limit the scope of the disclosure.

## Claims

1. A method for personal-network based seamless handover, **characterized in that** the method comprises:
when a personal network gateway receives a service handover request or needs to hand over a service, selecting (102), by the personal network gateway, a target personal network device; and
when the target personal network device agrees to perform a service handover, performing (104) the service handover from an original personal network device to the target personal network device by sending, by the personal network gateway, the target personal network device a service handover request comprising service description information;
receiving, by the personal network gateway, a handover-completes response returned by the target personal network device;
sending, by the personal network gateway, a personal network server an updating message for updating a service provider.

2. The method according to claim 1, wherein the service handover is initiated or triggered (101) by a user, the personal network server, the service, a personal network device, the personal network gateway, or a particular event.

3. The method according to claim 1, wherein the target personal network device is selected to be another personal network device other than the original personal network device in a same personal network.

4. The method according to claim 2, further comprising: when an initiator initiating or triggering the service handover is not the personal network gateway, before the selecting, by the personal network gateway, a target personal network device, receiving, by the personal network gateway, the service handover request containing the service description information sent by the initiator.

5. The method according to claim 4 or 2, further comprising: before performing the service handover, performing service synchronization between the original personal network device and the target personal network device;
when the service description information comprises the synchronization information for the service synchronization, acquiring, by the target personal network device, the synchronization information by receiving the synchronization information sent by the personal network gateway; and
when the service description information comprise no synchronization information for the service synchronization, acquiring, by the target personal network device, the synchronization information by interacting with the original personal network device or by interacting with the personal network server.

6. The method according to any of claims 1 to 4, further comprising: after receiving the handover-completes response, stopping the service previously used by the original personal network device.

7. The method according to claim 6, wherein the stopping the service previously used by the original personal network device comprises:
when the initiator is not the original personal network device, instructing, via the personal network gateway, the original personal network device to stop using the service; and
when the initiator is the personal network gateway, instructing directly by the personal network gateway, the original personal network device to stop using the service.

8. A personal network gateway device for personal-network based seamless handover, **characterized in that** the device comprises a target selecting unit and a service handover unit, wherein
the target selecting unit is configured to select (102) a target personal network device when the personal network gateway receives a service handover request or needs to hand over a service; and
the service handover unit is configured to perform (104) a service handover from an original personal network device to the target personal network device when the target personal network device agrees to perform the service handover, by sending the target personal network device a service handover request comprising service description information;
the device for personal-network based seamless handover is further configured to: receive a handover-completes response returned by the target personal network device; send a personal network server an updating message for updating a service provider.

9. The device according to claim 8, further configured to perform the service handover as initiated or triggered by a user, the personal network server, the service, a personal network device, the personal network gateway, or a particular event.

10. The device according to claim 8, wherein the target selecting unit is further configured to select another personal network device other than the original personal network device in a same personal network as the target personal network device.

11. The device according to claim 9, wherein the target selecting unit is further configured to, when an initiator initiating or triggering the service handover is not the personal network gateway, before the target personal network device is selected, receive the service handover request containing the service description information sent by the initiator.

## Patentansprüche

1. Verfahren zur persönlichen netzwerkbasierten nahtlosen Übergabe, **dadurch gekennzeichnet, dass** das Verfahren Folgendes umfasst:
wenn ein persönliches Netzwerk-Gateway eine Dienstübergabeanforderung empfängt oder einen Dienst übergeben muss, Auswählen (102), durch das persönliche Netzwerk-Gateway, einer persönlichen Zielnetzwerkvorrichtung; und
wenn die persönliche Zielnetzwerkvorrichtung zustimmt, eine Dienstübergabe durchzuführen, Durchführen (104) der Dienstübergabe von einer persönlichen Originalnetzwerkvorrichtung zu der persönlichen Zielnetzwerkvorrichtung durch Senden, durch das persönliche Netzwerk-Gateway, der persönlichen Zielnetzwerkvorrichtung einer Dienstübergabeanforderung, umfassend Dienstbeschreibungsinformationen;
Empfangen, durch das persönliche Netzwerk-Gateway, einer Antwort zur abgeschlossenen Übergabe, die durch die persönliche Zielnetzwerkvorrichtung zurückgegeben wird;
Senden, durch das persönliche Netzwerk-Gateway, einem persönlichen Netzwerk-Server einer Aktualisierungsnachricht zum Aktualisieren eines Dienstanbieters.

2. Verfahren nach Anspruch 1, wobei die Dienstübergabe durch einen Benutzer, den persönlichen Netzwerk-Server, den Dienst, eine persönliche Netzwerkvorrichtung, das persönliche Netzwerk-Gateway oder ein bestimmtes Ereignis initiiert oder ausgelöst (101) wird.

3. Verfahren nach Anspruch 1, wobei die persönliche Zielnetzwerkvorrichtung ausgewählt ist, eine andere persönliche Netzwerkvorrichtung zu sein, die anders als die persönliche Originalnetzwerkvorrichtung in einem gleichen persönlichen Netzwerk ist.

4. Verfahren nach Anspruch 2, ferner umfassend: wenn ein Initiator, der die Dienstübergabe initiiert oder auslöst, nicht das persönliche Netzwerk-Gateway ist, vor dem Auswählen, durch das persönliche Netzwerk-Gateway, einer persönlichen Zielnetzwerkvorrichtung, Empfangen, durch das persönliche Netzwerk-Gateway, der Dienstübergabeanforderung, die die Dienstbeschreibungsinformationen enthält, die durch den Initiator gesendet werden.

5. Verfahren nach Anspruch 4 oder 2, ferner umfassend: vor dem Durchführen der Dienstübergabe, Durchführen einer Dienstsynchronisation zwischen der persönlichen Originalnetzwerkvorrichtung und der persönlichen Zielnetzwerkvorrichtung;
wenn die Dienstbeschreibungsinformationen die Synchronisationsinformationen für die Dienstsynchronisation umfassen, Erfassen, durch die persönliche Zielnetzwerkvorrichtung, der Synchronisationsinformationen durch Empfangen der Synchronisationsinformationen, die durch das persönliche Netzwerk-Gateway gesendet werden; und
wenn die Dienstbeschreibungsinformationen keine Synchronisationsinformationen für die Dienstsynchronisation umfassen, Erfassen, durch die persönliche Zielnetzwerkvorrichtung, der Synchronisationsinformationen durch Interagieren mit der persönlichen Originalnetzwerkvorrichtung oder durch Interagieren mit dem persönlichen Netzwerk-Server.

6. Verfahren nach einem der Ansprüche 1 bis 4, ferner umfassend: nach dem Empfangen der Antwort zur abgeschlossenen Übergabe, Anhalten des zuvor durch die persönliche Originalnetzwerkvorrichtung verwendeten Dienstes.

7. Verfahren nach Anspruch 6, wobei das Anhalten des zuvor durch die persönliche Originalnetzwerkvorrichtung verwendeten Dienstes Folgendes umfasst:
wenn der Initiator nicht die persönliche Originalnetzwerkvorrichtung ist, Anweisen, durch das persönliche Netzwerk-Gateway, der persönlichen Originalnetzwerkvorrichtung, aufzuhören, den Dienst zu verwenden; und
wenn der Initiator das persönliche Netzwerk-Gateway ist, Anweisen, unmittelbar durch das persönliche Netzwerk-Gateway, der persönlichen Originalnetzwerkvorrichtung, aufzuhören, den Dienst zu verwenden.

8. Persönliche Netzwerk-Gateway-Vorrichtung zur persönlichen netzwerkbasierten nahtlosen Übergabe, **dadurch gekennzeichnet, dass** die Vorrichtung eine Zielauswahleinheit und eine Dienstübergabeeinheit umfasst, wobei
die Zielauswahleinheit konfiguriert ist, um eine persönliche Zielnetzwerkvorrichtung auszuwählen (102), wenn das persönliche Netzwerk-Gateway eine Dienstübergabeanforderung empfängt, oder einen Dienst übergeben muss; und
die Dienstübergabeeinheit konfiguriert ist, um eine Dienstübergabe von einer persönlichen Originalnetzwerkvorrichtung zu der persönlichen Zielnetzwerkvorrichtung durchzuführen (104), wenn die persönliche Zielnetzwerkvorrichtung zustimmt, die Dienstübergabe durchzuführen, durch Senden der persönlichen Zielnetzwerkvorrichtung einer Dienstübergabeanforderung, umfassend Dienstbeschreibungsinformationen;
die Vorrichtung zur persönlichen netzwerkbasierten nahtlosen Übergabe ferner konfiguriert ist zum: Empfangen einer Antwort zur abgeschlossenen Übergabe, die durch die persönliche Zielnetzwerkvorrichtung zurückgegeben wird; Senden einem persönlichen Netzwerk-Server einer Aktualisierungsnachricht zum Aktualisieren eines Dienstanbieters.

9. Vorrichtung nach Anspruch 8, ferner konfiguriert, um die Dienstübergabe durchzuführen, die durch einen Benutzer, den persönlichen Netzwerk-Server, den Dienst, eine persönliche Netzwerkvorrichtung, das persönliche Netzwerk-Gateway oder ein bestimmtes Ereignis initiiert oder ausgelöst wird.

10. Vorrichtung nach Anspruch 8, wobei die persönliche Zielnetzwerkvorrichtung ferner konfiguriert ist, um eine andere persönliche Netzwerkvorrichtung, die anders als die persönliche Originalnetzwerkvorrichtung ist, in einem gleichen persönlichen Netzwerk als die persönliche Zielnetzwerkvorrichtung auszuwählen.

11. Vorrichtung nach Anspruch 9, wobei die Zielauswahleinheit ferner konfiguriert ist, um, wenn ein Initiator, der die Dienstübergabe initiiert oder auslöst, nicht das persönliche Netzwerk-Gateway ist, bevor die persönliche Zielnetzwerkvorrichtung ausgewählt ist, die Dienstübergabeanforderung, die die Dienstbeschreibungsinformationen enthält, die durch den Initiator gesendet werden, zu empfangen.

## Revendications

1. Procédé pour un transfert fluide basé sur réseau personnel, **caractérisé en ce que** le procédé comprend :
lorsqu'une passerelle de réseau personnel reçoit une requête de transfert de service ou doit transférer un service, la sélection (102), par la passerelle de réseau personnel, d'un dispositif de réseau personnel cible ; et
lorsque le dispositif de réseau personnel cible accepte de réaliser un transfert de service, la réalisation (104) du transfert de service du dispositif de réseau personnel d'origine au dispositif de réseau personnel cible par l'envoi, par la passerelle de réseau personnel, au dispositif de réseau personnel cible d'une requête de transfert de service comprenant des informations de description de service ;
la réception, par la passerelle de réseau personnel, d'une réponse de transfert terminé renvoyée par le dispositif de réseau personnel cible ;
l'envoi, par la passerelle de réseau personnel, à un serveur de réseau personnel d'un message d'actualisation pour actualiser un fournisseur de service.

2. Procédé selon la revendication 1, dans lequel le transfert de service est initié ou déclenché (101) par un utilisateur, le serveur de réseau personnel, le service, un dispositif de réseau personnel, la passerelle de réseau personnel ou un événement particulier.

3. Procédé selon la revendication 1, dans lequel le dispositif de réseau personnel cible est sélectionné pour être un autre dispositif de réseau personnel autre que le dispositif de réseau personnel d'origine dans un même réseau personnel.

4. Procédé selon la revendication 2, comprenant en outre : lorsqu'un initiateur initiant ou déclenchant le transfert de service n'est pas la passerelle de réseau personnel, avant la sélection, par la passerelle de réseau personnel, d'un dispositif de réseau personnel cible, la réception, par la passerelle de réseau personnel, de la requête de transfert de service contenant les informations de description de service envoyées par l'initiateur.

5. Procédé selon la revendication 4 ou 2, comprenant en outre : avant la réalisation du transfert de service, la réalisation d'une synchronisation de service entre le dispositif de réseau personnel d'origine et le dispositif de réseau personnel cible ;
lorsque les informations de description de service comprennent les informations de synchronisation pour la synchronisation de service, l'acquisition, par le dispositif de réseau personnel cible, des informations de synchronisation par la réception des informations de synchronisation envoyées par la passerelle de réseau personnel ; et
lorsque les informations de description de service ne comprennent pas d'informations de synchronisation pour la synchronisation de service, l'acquisition, par le dispositif de réseau personnel cible, des informations de synchronisation par une interaction avec le dispositif de réseau personnel d'origine ou par une interaction avec le serveur de réseau personnel.

6. Procédé selon l'une quelconque des revendications 1 à 4, comprenant en outre : après la réception de la réponse de transfert terminé, l'arrêt du service précédemment utilisé par le dispositif de réseau personnel d'origine.

7. Procédé selon la revendication 6, dans lequel l'arrêt du service précédemment utilisé par le dispositif de réseau personnel d'origine comprend :
lorsque l'initiateur n'est pas le dispositif de réseau personnel d'origine, l'instruction, par le biais de la passerelle de réseau personnel, au dispositif de réseau personnel d'origine d'arrêter l'utilisation du service ; et
lorsque l'initiateur est le dispositif de réseau personnel d'origine, l'instruction directement par la passerelle de réseau personnel, au dispositif de réseau personnel d'origine d'arrêter l'utilisation du service.

8. Dispositif de passerelle de réseau personnel pour un transfert fluide basé sur réseau personnel, **caractérisée en ce que** le dispositif comprend une unité de sélection de cible et une unité de transfert de service, où
l'unité de sélection de cible est configurée pour sélectionner (102) un dispositif de réseau personnel cible lorsque la passerelle de réseau personnel reçoit une requête de transfert de service ou doit transférer un service ; et
l'unité de transfert de service est configuré pour réaliser (104) un transfert de service d'un dispositif de réseau personnel d'origine au dispositif de réseau personnel cible lorsque le dispositif de réseau personnel cible accepte de réaliser le transfert de service, par l'envoi au dispositif de réseau personnel cible d'une requête de transfert de service comprenant des informations de description de service ;
le dispositif pour un transfert fluide basé sur réseau personnel est en outre configuré pour : recevoir une réponse de transfert terminé renvoyée par le dispositif de réseau personnel cible ; envoyer à un serveur de réseau personnel un message d'actualisation pour actualiser un fournisseur de service.

9. Dispositif selon la revendication 8, configuré pour réaliser le transfert de service tel qu'initié ou déclenché par un utilisateur, le serveur de réseau personnel, le service, un dispositif de réseau personnel, la passerelle de réseau personnel ou un événement particulier.

10. Dispositif selon la revendication 8, dans lequel l'unité de sélection de cible est en outre configurée pour sélectionner un autre dispositif de réseau personnel autre que le dispositif de réseau personnel d'origine dans un même réseau personnel en tant que dispositif de réseau personnel cible.

11. Dispositif selon la revendication 9, dans lequel l'unité de sélection de cible est en outre configurée pour, lorsqu'un initiateur initiant ou déclenchant le transfert de service n'est pas la passerelle de réseau personnel, avant la sélection du dispositif de réseau personnel cible, recevoir la requête de transfert de service contenant les informations de description de service envoyées par l'initiateur.
